# EUROPEAN PATENT SPECIFICATION

(11) **EP 3 598 469 B1**
(45) Date of publication and mention of the grant of the patent: **03.03.2021**
(21) Application number: 19186967.6
(22) Date of filing: 18.07.2019
(51) Int. Cl.: H01H 13/48, H01H 13/84, H01H 13/52, H01H 3/60, B60K 37/06

(54) **PUSH-BUTTON SWITCH FOR VEHICLE DASHBOARDS**
TASTSCHALTER FÜR FAHRZEUGARMATURENBRETT
INTERRUPTEUR À BOUTON-POUSSOIR POUR TABLEAUX DE BORD DE VÉHICULES

(30) Priority: 18.07.2018 IT 201800007289
(43) Date of publication of application: 22.01.2020
(73) Proprietor: VIMERCATI S.p.A., 20016 Pero (Milano) (IT)
(72) Inventor: BOANO, Marco, 20024 Garbagnate Milanese (MI) (IT)
(74) Representative: Martini, Gabriele

(56) References cited:
- EP-A1- 0 461 283
- EP-A1- 3 378 693
- WO-A1-2014/033659
- US-A1- 2017 365 422

## Description

### CROSS-REFERENCE TO RELATED APPLICATIONS

This patent application claims priority from Italian patent application no. 102018000007289 filed on 18/07/2018.

### TECHNICAL FIELD

The present invention relates to a push-button switch, especially for vehicle dashboards. However, the application of the invention is not limited to the automotive sector alone, which we will refer to below for convenience.

### BACKGROUND ART

As is well known, in the modern automotive industry, especially in the production of medium-high range vehicles, there is an increasing need to supply consumers with control devices (switches, selectors and the like) that provide a high level of perceived quality, including from a sensory perspective (touch, hearing and sight). In the passenger compartment, in fact, there are usually control devices that the driver or passengers directly use for the execution of various functions. These functions can comprise, just to cite some examples, activating headlights and flashers, switching courtesy lights on and off, controlling communication, entertainment or air conditioning devices, and setting up navigation systems. The search for quality when it comes to customer perception when using such control devices is a driving factor and determines in no small measure the development of components in the automotive sector.

The parameters of the push-button switches to which consumers are particularly attentive are the stroke, which must be reduced to a minimum, the activation force threshold, which must be well calibrated, and the quietness that is perceived as an indicator of product quality because it facilitates and makes pleasant the activation of the control devices. "Quietness" here means the reduction in noisiness or sound effects that are produced during the activation and release of the switch as a result of the mechanical interaction of the switch's moving components.

WO 2014/033659 A1 discloses a push-button switch for vehicle dashboards according to the preamble of claim 1.

### DISCLOSURE OF INVENTION

The purpose of the present invention is therefore to provide a push-button switch that, on the one hand, has a reduced actuating stroke and, on the other hand, offers high performance in terms of auditory quality. In particular, the main purpose of the present invention is, in fact, to improve the quietness of the device, i.e. to reduce the noisiness connected to the activation and release stages of the switch.

The present invention finds its most advantageous application within a particular switch structure, a structure that allows the consumer to perform a very short actuating stroke. This short stroke push-button switch comprises:
- a substrate on which an electric circuit is provided;
- a cursor mobile along an actuation direction with a stroke between a rest position and a pressed position;
- a pad made of elastic polymeric material applied to the substrate;
- a pre-loading device configured to provide a pre-loading force to the cursor along the actuation direction towards the rest position;
- a metallic switch member that is dome-shaped and housed between the pad and the substrate;
wherein the cursor has a base coupled with the pre-loading device from which an actuator member extends that is aligned with the switch member, the actuator member being cylindrical in shape with an actuator base and a lateral surface; and wherein the actuator member is misaligned with respect to the pre-loading device.

The misalignment of the actuator member and of the pre-loading device allows the latter to be excluded from the tolerance chain, which must take into account the sum of all the process tolerances relating to the elements that determine the movement and the stopping of the cursor. The possibility of containing the tolerances by excluding elements from the chain allows the stroke to be reduced beyond the limits normally achievable. Thanks to the structure of the switch as described, it is possible to obtain fairly reduced strokes and in this sense this structure is preferable for introducing the present invention, which aims to increase its quietness. However, the present invention could also be independent of the positioning of the pre-load with respect to the actuator member.

According to the main aspect of the present invention, the push-button switch comprises a first damping member, preferably made of elastic polymeric material (e.g. silicone rubber), arranged at least partially around the lateral surface of the actuator member.

Advantageously, the first damping member installed in this position cooperates with the actuator member, the switch member, and the substrate during the actuation of the switch and thus reduces the noisiness (i.e. the sound effects) that is produced during the mutual movement and contact of these components, particularly during the snap collapse of the switch member.

According to one embodiment of the invention, the first damping member is made in the form or a coating made of elastic polymeric material comoulded around the actuator member for covering the lateral surface and the actuator base. This embodiment of the invention is particularly advantageous in production terms.

According to one embodiment of the invention, the switch comprises a second damping member. This second damping member is also made of elastic polymeric material, preferably silicone rubber, and as a local coating comoulded on the cursor. In particular, this second damping member is comoulded on the cursor on the opposite side with respect to the first damping member. In detail, the switch comprises a casing housing the cursor wherein the casing is provided with an annular abutment configured to make an end-stroke abutment for a flange of the cursor when the cursor is in the rest position. In this structural configuration, the second damping member covers the flange of the cursor and is located between the annular abutment and the cursor.

Advantageously, this embodiment allows noisiness to be reduced during the switch release stages wherein the plastic flange usually impacts against the abutment, which is also made of plastic. Moreover, this embodiment offers the additional advantage of better stabilizing the switch under release conditions. In fact, the contact between the rubber of the coating and the plastic abutment produces greater friction in the plastic-plastic contact and increases the tactile comfort of the consumer who operates the switch. The feeling is, in fact, that of a switch that is more firmly in place.

According to one embodiment of the invention, the first and second damping members are made as a single coating of elastic polymeric material that is comoulded around the cursor from the actuator member to the flange. This embodiment combines the advantages of previous solutions with an optimised production economy.

According to an alternative embodiment of the invention, the first damping member is made in the form of a ring fitted at least partially around the lateral surface of a portion of the actuator having a smaller radius. In particular, in this embodiment the ring is produced integral with the pad, and is, therefore, made of elastic polymeric material, preferably silicone rubber, and is connected to the pad by a connection membrane that acts as a spring.

According to another aspect of the invention, which finds its advantageous application when integrated in the embodiments just described but which can also be considered independent of these and therefore autonomous, the metallic switch member shaped like a dome comprises openings or windows. In this configuration, the first damping member preferably comprises localised protruding points aligned with the openings of the switch member and configured so that, during the actuating stroke of the cursor from the rest position to the pressed position, the localised protruding points come into contact with the substrate before the snap of the switch member. Advantageously, this solution additionally reduces the noisiness connected to the activation of the switch.

According to another aspect of the invention, an aspect that finds its advantageous application when integrated in the embodiments just described but that can also be considered independent and therefore autonomous, the switch member is coupled to the pad and not to the substrate and the coupling is such as to allow sliding micro-movements of the switch member. Advantageously, in this way the service life of the switch is increased because these micro-movements, on the one hand, operate in cleaning the printed circuit board and, on the other hand, they avoid excessive local point wear and tear of the switch member.

### BRIEF DESCRIPTION OF THE DRAWINGS

The present invention will now be described with reference to the appended drawings, which illustrate some non-limiting embodiments thereof, wherein:
- Figure 1 is a frontal view, sectioned along an axial longitudinal plane, of a push-button switch according to a first embodiment of the present invention;
- Figure 2 is a perspective view of a component of the push-button switch in Figure 1;
- Figure 3 is an enlarged view of a detail of the push-button switch in Figure 1 in which two construction details are additionally enlarged;
- Figures 4 and 5 are views of components of the push-button switch in Figure 1, with parts removed for clarity;
- Figure 6 is a frontal view, sectioned along an axial longitudinal plane, of a push-button switch according to a second embodiment of the present invention;
- Figure 7 is an enlarged view of a detail of the push-button switch in Figure 5 in which a construction detail is additionally enlarged.

### BEST MODE FOR CARRYING OUT THE INVENTION

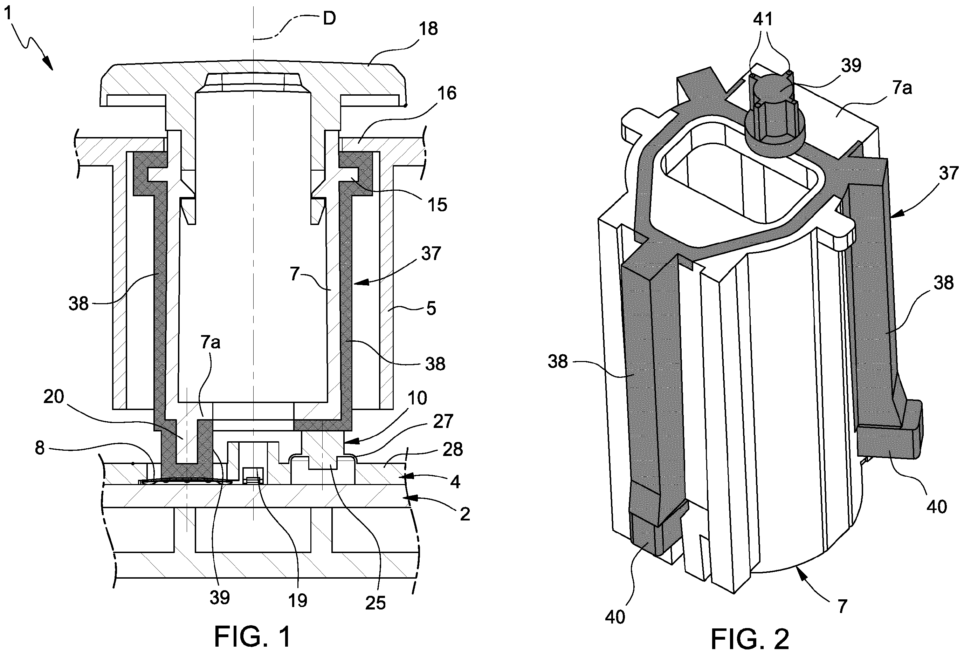

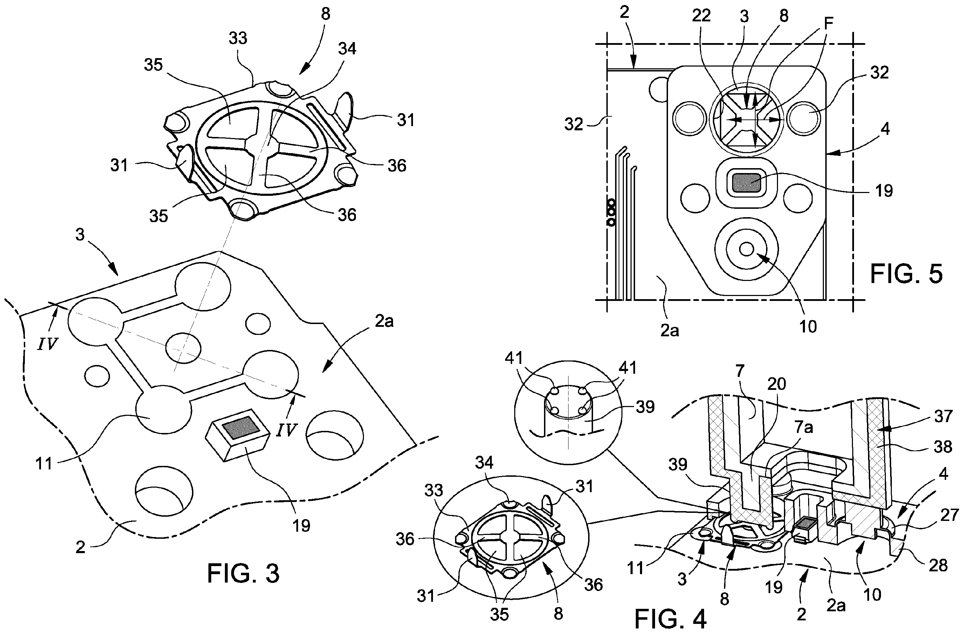

Figure 1 shows a section of a first example of an embodiment of a push-button switch for vehicle dashboards made according to the present invention. The number 1 indicates, as a whole, the switch, which comprises a substrate 2, on which a printed circuit 3 (visible only in part in Figure 3 and more so in Figure 4 with the reference 3) is provided, a pad 4, a casing 5, a cursor 7, a metallic switch member 8, and a pre-loading device 10. The casing 5 and the cursor 7 are made of plastic material.

The substrate 2 is a board for printed circuits and the relative printed circuit can be provided on one or both sides of the substrate 2. In the embodiments shown in the figures (see also the details in Figure 3), the printed circuit 3 has a first switch terminal 11 and a second switch terminal 12 on a first face or inner face 2a of the substrate 2 and partially extends on a second face or opposite external face of the substrate 2. The switch terminals 11, 12 are connected to the rest of the printed circuit 3 via ducts passing through the substrate (not shown for simplicity).

With reference again to Figure 1, the pad 4 is made of an elastic polymeric material, e.g. silicone rubber, and is coupled to the inner face 2a of the substrate 2, e.g. by an adhesive layer not shown. The casing 5 is coupled to the substrate 2 and houses the cursor 7. More specifically, the casing 5 defines a sliding seat for the cursor 7, which is mobile along an actuation direction D that is substantially perpendicular to the substrate 2 with a stroke between a rest position and a pressed position. A flange 15 and an annular abutment 16 define part of the stopping members that limit the stroke of the cursor 7 to the rest position.

The cursor 7, which is essentially cylindrical in shape, is provided with an aesthetic cover button 18 at one end, facing outwards, and has a base 7a at the opposite end, facing towards the substrate 2. The cursor 7 can be hollow to allow the backlighting of the aesthetic cover button 18 by an LED 19 placed on the substrate 2. The cursor 7 is provided with an actuator member 20 that, in the example shown, consists of a cylindrical-shaped portion of the cursor 7 extending from the base 7a towards the substrate 2 parallel to the actuation direction D. This actuator member 20 is configured to actuate the switch member 8 as described further on. The switch member 8 is housed between the pad 4 and the substrate 2 at the printed circuit 3. In particular, as is visible in Figure 3, the switch member 8 comprises feet 31 that extend substantially orthogonally with respect to the substrate 2 towards the pad 4 in which, in fact, they are housed in special seats 32. The coupling between the feet 31 and the relative seats 32 is preferably configured so that it allows relative micro-movements between the switch member 8 and the pad 4. Since the pad 4 is coupled to the substrate 2, the switch member 8 can perform sliding micro-movements with respect to the substrate 2. These micro-movements are extremely advantageous because they allow the service life of the switch to be extended for two reasons: the first is that, as a result of the micro-movements, the points of contact between the switch member 8 and the circuit 3 of the substrate 2 are not always the same, resulting in less local wear and tear; the second is that the micro-movements (parallel to the plane defined by the face 2a of the substrate 2) ensure that the coupling zone between the switch member 8 and the circuit 3 of the substrate 2 is kept clean. These micro-movements have been outlined in Figure 5 with the arrows F and, again in Figure 5, you can see how the switch member 8 is arranged between the substrate 2 and the pad 4 that comprises the seats (in the form of protruding seats) for the feet of the switch member 8. As shown in Figure 3, the switch member 8 is shaped like a metal dome and, when housed at the circuit 3 between the substrate 2 and the pad, it is configured to reversibly collapse with a snap action under the application of a force higher than a snap force threshold directed towards the substrate 2. When the force is removed, the shape of the switch member 8 is such that it automatically returns to the initial rest configuration. As known, in the collapsed configuration the circuit is closed and the command associated with the switch is performed. The circuit is open when it is not collapsed. As shown in Figure 3, the switch member 8 has a peripheral portion 33, which acts as the base for the portion of dome 34 and which is in contact with the first terminal 11 of the printed circuit 3. In the non-collapsed configuration, the central portion 34 of the dome of the switch member 8 remains separate from the second terminal 12 of the printed circuit 3. In the collapsed configuration, which occurs when the force threshold of the snap acting on the dome is exceeded, the central portion of the switch member 8 comes into contact with the second terminal 12 closing the circuit. The switch member therefore defines a normally open switch. As shown in Figure 3, the dome has four through openings 35 or windows so that the central portion of dome 34 is an island that is connected to the periphery 33 or base with four connection radii 36. Tests performed by the applicant showed that this particular shape of the switch member 8, and, in particular, the presence of openings or windows, reduces the noisiness that is produced by the snap of the dome. Moreover, these openings will have an additional function that will be described below. Of course, the pad 4 has a window 22 at the switch member 8 and that houses at least part of the free end of the actuator member 20. When the cursor 7 is pressed, the actuator member 20 activates the switch member 8 and, following additional pressure, deforms the dome of the switch member 8 until it causes a transition from the rest configuration (open circuit) to the collapsed configuration (closed circuit). When the action of the cursor 7 against the dome ceases, the switch member 8 spontaneously returns to the rest configuration. In this rest configuration it can be separated from the switch member 8 or in contact with it without, however, pressing against it.

The pre-loading device 10 is configured to provide a pre-loading force to the cursor 7 along the actuation direction D towards the rest position. A portion of the base 7a of the cursor 7 is coupled (in contact in the example described) with the pre-loading device 10, which is misaligned with respect to the actuator member 20. In one embodiment, the actuator member 20 and the pre-loading device 10 are opposite and symmetrically arranged with respect to an axis of the cursor 7. In addition, the switch member 8 and the pre-loading device 10 are not superimposed along the actuation direction D in both embodiments shown, the pre-loading device 10 is integrated into the pad 4 and comprises a pressure element 25 and a pre-loading membrane 27 connecting the pressure element 25 to a portion of the pre-loading support 28 of the pad 4. The pre-loading membrane 27 defines a contrast spring configured to provide a pre-loading force in response to deformations in the actuation direction D. In practice, in the rest position, the distance between the base 7a of the cursor 7 and the pad is such that the pre-loading membrane is deformed and therefore the pre-loading device 10 keeps the cursor in the rest position in the absence of external pressure on the cursor 7.

As shown in the embodiment shown in Figures 1, 2 and 4, the cursor 7 is a body made via bi-material moulding. In particular, the plastic cursor 7 is provided with a coating 37 in elastic polymeric material, for example silicone rubber, which completely coats the actuator member 20 (i.e. both the activation end of the dome and the lateral surface) and which extends in the form of three generators 38 along the cursor 7 until it covers the flange 15 portions. According to this embodiment, which is also particularly advantageous from a production point of view, the rubber that covers the actuator member acts as the first damping member 39 that reduces the sound effect produced by the cooperation of the actuator 20 with the dome 8. The rubber that covers the flange 15 portions acts as a second damping member 40 that reduces the sound effect generated by the cooperation of the flange 15 with the shoulder 16. Thus, the noise is advantageously damped both during the actuation of the descending stroke and during the actuation of the ascending stroke of the cursor 7.

As you can partially see in Figure 2 and, even more so, in one of the two enlarged details in Figure 4, at the activation end of the actuator 20 the rubber coating comprises four localised protruding points 41 that, when the dome 8 is installed, are aligned with the windows 35. According to this solution, during the activation before the dome collapses, the four localised protruding points 41 come into contact with the substrate 2, thus additionally damping the noise connected with the dome collapse.

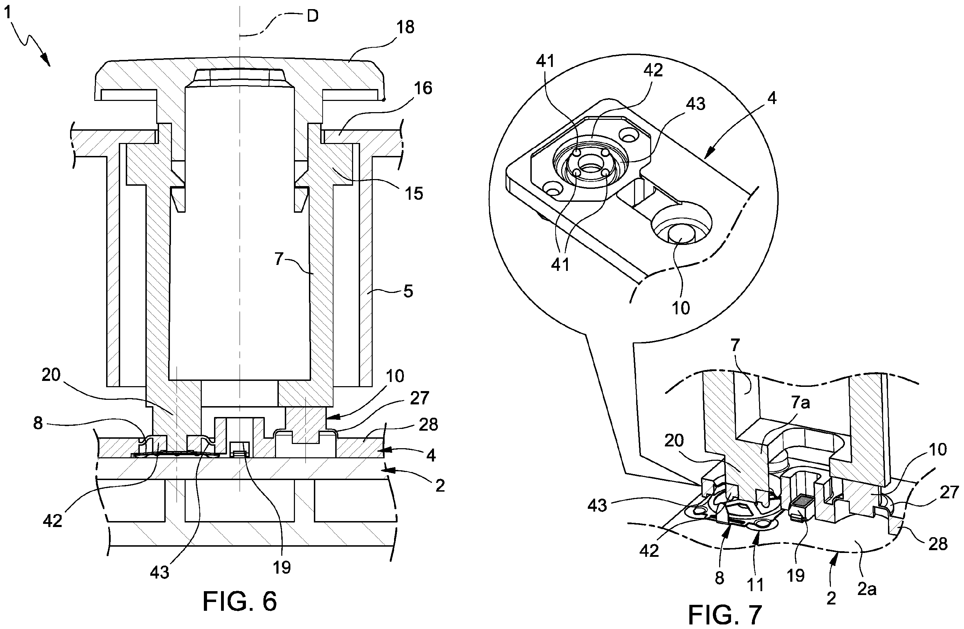

A second embodiment of the invention is shown in Figures 6 and 7, wherein parts equivalent to those already described are indicated with the same reference numbers. In this case, a push-button switch 100 differs from the push-button switch 1 already described for the fact that the cursor 7 is not provided with the coating 37. However, the noise damping effect during the switch actuation stroke is still achieved thanks to the presence of a ring 42 produced as one piece with the pad 4 and which fits a lateral surface of a reduced radius terminal portion of the actuator 20. This ring 42, made of rubber like the pad 4, is connected to the pad by a membrane 43. As with the pre-loading 10, the membrane 43 acts as a contrast spring configured to provide a pre-loading force in response to deformations in the actuation direction D. In this configuration, therefore, the ring 42 is mobile towards the substrate 2 only under the descending thrust of the actuator 20. As you can see in the enlarged detail of Figure 7, this ring has 4 localised protruding points 41 configured to work exactly like the local protruding points 41 of the coating 37 of the example in Figure 1.

Lastly, it is clear that modifications and variations can be made to the push-button switch described herein without departing from the scope of the present invention, as described in the appended claims.

## Claims

1. A push-button switch for vehicle dashboards, the push-button switch (1) comprising:
- a substrate (2), on which an electric circuit (3) is provided;
- a cursor (7) mobile along an actuation direction (D) with a stroke between a rest position and a pressed position;
- a pad (4) made of an elastic polymeric material and applied to the substrate (2);
- a pre-loading device (10) configured to provide a pre-loading force to the cursor (7) along the actuation direction (D) toward the rest position;
wherein the cursor (7) has a base (7a) coupled to the pre-loading device (10) and provided with an actuator member (20) extending from the base (7a) toward the substrate (2), the actuator member (20) being cylindrical in shape and having an actuator base and a lateral surface; the actuator member (20) being configured to actuate the snap of the switch member (8) when the cursor (7) is in the pressed position; the actuator member (20) being aligned to the switch member (8) and misaligned with respect to the pre-loading device (10); **characterised by** a metallic switch member (8) that is dome-shaped configured to reversibly collapse with a snap action and housed between the pad (4) and the substrate (2; and wherein the push-button switch (1) comprises moreover a first damping member (39, 42) arranged at least partially around the lateral surface of the actuator member (20).

2. The switch as claimed in claim 1, wherein the first damping member (39) is produced as a coating made of elastic polymeric material comoulded around the actuator member (20) for covering the lateral surface and the actuator base.

3. The switch as claimed in claim 2, wherein the switch (1) comprises a casing (5) housing the cursor (7), the casing being provided with an annular abutment (16) configured to make an end-stroke abutment for a flange (15) of the cursor (7) when the cursor (7) is in the rest position; wherein the switch (1) comprises moreover a second damping member (40) arranged between the annular abutment (16) and the flange (15) of the cursor (7).

4. The switch as claimed in claim 3, wherein the second damping member (40) is produced as a coating made of elastic polymeric material comoulded around the flange (15) of the cursor (7).

5. The switch as claimed in claim 4, wherein the first and the second damping member (39, 40) are a single body produced as a coating made of elastic polymeric material comoulded around the cursor (7) from the actuator member (20) to the flange (15).

6. The switch as claimed in claim 1, wherein the first damping member (42) is produced in the form of a ring (42) fitted around the lateral surface of a portion of the actuator (20) having a smaller radius.

7. The switch as claimed in claim 6, wherein the ring (42) is produced integral with the pad (4) and is connected to the pad (4) by a connection membrane (43).

8. The switch as claimed in any one of the foregoing claims, wherein the switch member (8) comprises openings (35), the first damping member (39, 42) comprising localised protruding points (41) aligned with the openings (35) of the switch member (8) and configured so that, during the actuating stroke of the cursor (7) from the rest position to the pressed position, the localised protruding points (41) come into contact with the substrate (2) before the snap of the switch member (8).

9. The switch as claimed in any one of the foregoing claims, wherein the switch member (8) is coupled to the pad (4; 104) as to allow sliding micro-movements of the switch member (8) with respect to the substrate (2).

## Patentansprüche

1. Tastschalter für Fahrzeugarmaturenbrett, umfassend:
- ein Substrat (2), auf welchem ein elektrischer Schaltkreis (3) bereitgestellt wird;
- ein entlang einer Betätigungsrichtung (D) beweglicher Positionsanzeiger (7), mit einem Anschlag zwischen einer Ruhestellung und einer eingedrückten Stellung;
- eine auf dem Substrat (2) aufgebrachte Unterlage (4) aus einem elastischen Polymermaterial;
- ein Vorspanngerät (10), welches dazu eingerichtet ist eine Vorspannkraft für den Positionsanzeiger (7) entlang der Betätigungsrichtung (D) in Richtung der Ruhestellung bereitzustellen;
wobei der Positionsanzeiger (7) eine an das Vorspanngerät (10) angeschlossene Basis (7a) aufweist und mit einem sich von der Basis (7a) in Richtung des Substrats (2) erstreckenden Stellglied (20) ausgestattet ist, das Stellglied (20) eine zylindrische Form und eine Aktuatorbasis und eine Seitenfläche aufweist;
das Stellglied (20) dazu eingerichtet ist den Schnapper des Schalters (8) zu betätigen, wenn sich der Positionsanzeiger (7) in der eingedrückten Stellung befindet;
das Stellglied (20) auf den Schalter (8) ausgerichtet ist und einen Versatz bezüglich des Vorspanngeräts (10) aufweist;
**gekennzeichnet durch**
einen kuppelförmigen metallischen Schalter (8), welcher dazu eingerichtet ist in einem Schnappvorgang reversibel zusammenzufallen und welcher zwischen der Unterlage (4) und dem Substrat (2) angeordnet ist; und wobei der Tastschalter (1) zusätzlich ein erstes Dämpferelement (39, 42) umfasst, welches wenigstens teilweise um die Seitenfläche des Stellglieds (20) angeordnet ist.

2. Tastschalter gemäß Anspruch 1, wobei das erste Dämpferelement (39) als eine an das Stellglied (20) angeformte Beschichtung aus elastischem Polymermaterial zum Abdecken der Seitenfläche und der Aktuatorbasis hergestellt ist.

3. Tastschalter gemäß Anspruch 2, wobei der Tastschalter (1) ein den Positionsanzeiger (7) beherbergendes Gehäuse (5) umfasst, das Gehäuse mit einem ringförmigen Anschlag (16) versehen ist, welcher dazu eingerichtet ist einen Endanschlag für einen Flansch (15) des Positionsanzeigers (7) bereitzustellen, wenn sich der Positionsanzeiger (7) in der Ruhestellung befindet; wobei der Tastschalter (1) außerdem ein zweites, zwischen dem ringförmigen Anschlag (16) und dem Flansch (15) des Positionsanzeigers (7) angeordnetes Dämpferelement (40) umfasst.

4. Tastschalter gemäß Anspruch 3, wobei das zweite Dämpferelement (40) als eine an den Flansch (15) des Positionsanzeigers (7) angeformte Beschichtung aus elastischem Polymermaterial hergestellt ist.

5. Tastschalter gemäß Anspruch 4, wobei das erste und zweite Dämpferelement (39, 40) ein einziger Körper sind, der als eine um den Positionsanzeiger (7) herum angeformte und vom Stellglied (20) bis zum Flansch (15) reichende Beschichtung aus elastischem Polymermaterial hergestellt ist.

6. Tastschalter gemäß Anspruch 1, wobei das erste Dämpferelement (42) in Form eines um die Seitenfläche eines einen kleineren Radius aufweisenden Teils des Stellglieds (20) angebrachten Rings (42) hergestellt ist.

7. Tastschalter gemäß Anspruch 6, wobei der Ring (42) integral mit der Unterlage (4) hergestellt ist und mit der Unterlage (4) über eine Verbindungsmembran (43) verbunden ist.

8. Tastschalter gemäß einem der vorhergehenden Ansprüche, wobei der Schalter (8) Öffnungen (35) umfasst, das erste Dämpferelement (39, 42) örtlich begrenzte und zu den Öffnungen (35) des Schalters (8) ausgerichtete hervorstehende Punkte (41) umfasst, welche dazu eingerichtet sind, dass während der Betätigung des Positionsanzeigers (7) aus der Ruhestellung in die eingedrückte Stellung die örtlich begrenzten hervorstehenden Punkte (41) mit dem Substrat (2) vor dem Schnapper des Schalters (8) in Kontakt kommen.

9. Tastschalter gemäß einem der vorhergehenden Ansprüche, wobei der Schalter (8) mit der Unterlage (4; 104) gekoppelt ist, um gleitende Mikrobewegungen des Schalters (8) gegenüber dem Substrat (2) zu erlauben.

## Revendications

1. Interrupteur à bouton-poussoir pour tableaux de bord de véhicules, l'interrupteur (1) à bouton-poussoir comprenant :
- un substrat (2), sur lequel est placé un circuit électrique (3) ;
- un curseur (7) mobile suivant une direction (D) d'actionnement avec une course entre une position de repos et une position enfoncée ;
- une garniture (4) en un matériau polymérique élastique et appliquée au substrat (2) ;
- un dispositif (10) de précharge configuré pour fournir un effort de précharge au curseur (7) suivant la direction (D) d'actionnement vers la position de repos ; le curseur (7) comprenant une base (7a) couplée au dispositif (10) de précharge et munie d'un élément actionneur (20) s'étendant à partir de la base (7a) vers le substrat (2), l'élément actionneur (20) étant de forme cylindrique et comprenant une base d'actionneur et une surface latérale ; l'élément actionneur (20) étant configuré pour actionner le déclic de l'élément (8) d'interrupteur lorsque le curseur (7) est dans la position enfoncée ; l'élément actionneur (20) étant aligné sur l'élément (8) d'interrupteur et hors d'alignement par rapport au dispositif (10) de précharge ;
**caractérisé par** un élément (8) d'interrupteur métallique en forme de dôme qui est configuré pour s'affaisser de manière réversible avec une action de déclic et logé entre la garniture (4) et le substrat (2) ; et
l'interrupteur (1) à bouton-poussoir comprenant en outre un premier élément amortisseur (39, 42) agencé au moins partiellement autour de la surface latérale de l'élément actionneur (20).

2. Interrupteur selon la revendication 1, le premier élément amortisseur (39) étant réalisé sous la forme d'un revêtement en matériau polymérique élastique co-moulé autour de l'élément actionneur (20) pour recouvrir la surface latérale et la base d'actionneur.

3. Interrupteur selon la revendication 2, l'interrupteur (1) comprenant un étui (5) renfermant le curseur (7), l'étui étant muni d'une portée annulaire (16) configurée pour former une portée de fin de course pour une collerette (15) du curseur (7) lorsque le curseur (7) est dans la position de repos ; l'interrupteur (1) comprenant en outre un second élément amortisseur (40) agencé entre la portée annulaire (16) et la collerette (15) du curseur (7).

4. Interrupteur selon la revendication 3, le second élément amortisseur (40) étant réalisé sous la forme d'un revêtement en matériau polymérique élastique co-moulé autour de la collerette (15) du curseur (7).

5. Interrupteur selon la revendication 4, le premier et le second élément amortisseur (39, 40) étant un seul corps réalisé sous la forme d'un revêtement en matériau polymérique élastique co-moulé autour du curseur (7) de l'élément actionneur (20) à la collerette (15).

6. Interrupteur selon la revendication 1, le premier élément amortisseur (42) étant réalisé sous la forme d'une bague (42) ajustée autour de la surface latérale d'une partie de l'actionneur (20) présentant un plus petit rayon.

7. Interrupteur selon la revendication 6, la bague (42) étant réalisée d'un seul tenant avec la garniture (4) et étant reliée à la garniture (4) par une membrane (43) de liaison.

8. Interrupteur selon l'une quelconque des revendications précédentes, l'élément (8) d'interrupteur comprenant des ouvertures (35), le premier élément amortisseur (39, 42) comprenant des points saillants localisés (41) alignés avec les ouvertures (35) de l'élément (8) d'interrupteur et configurés de telle manière que, pendant la course d'actionnement du curseur (7) de la position de repos à la position enfoncée, les points saillants localisés (41) entrent en contact avec le substrat (2) avant le déclic de l'élément (8) d'interrupteur.

9. Interrupteur selon l'une quelconque des revendications précédentes, l'élément (8) d'interrupteur étant couplé à la garniture (4 ; 104) de façon à permettre des micromouvements de glissement de l'élément (8) d'interrupteur par rapport au substrat (2).
